(19) **Europäisches Patentamt / European Patent Office / Office européen des brevets**

(11) **EP 1 638 474 B1**

(12) **EUROPÄISCHE PATENTSCHRIFT**

(45) Veröffentlichungstag und Bekanntmachung des Hinweises auf die Patenterteilung:
**09.05.2007 Patentblatt 2007/19**

(21) Anmeldenummer: **04740206.0**

(22) Anmeldetag: **23.06.2004**

(51) Int Cl.:
*A61C 1/00* (2006.01)    *A61C 1/08* (2006.01)

(86) Internationale Anmeldenummer:
**PCT/EP2004/006786**

(87) Internationale Veröffentlichungsnummer:
**WO 2005/000144 (06.01.2005 Gazette 2005/01)**

(54) **ZAHNBEHANDLUNGSVORRICHTUNG**

DENTAL TREATMENT DEVICE

APPAREIL DE TRAITEMENT DENTAIRE

(84) Benannte Vertragsstaaten:
**AT BE BG CH CY CZ DE DK EE ES FI FR GB GR HU IE IT LI LU MC NL PL PT RO SE SI SK TR**

(30) Priorität: **23.06.2003 DE 20309622 U**

(43) Veröffentlichungstag der Anmeldung:
**29.03.2006 Patentblatt 2006/13**

(73) Patentinhaber: **Behr, Gabriele**
**82211 Herrsching (DE)**

(72) Erfinder:
• **Behr, Karl**
**82211 Herrsching (DE)**
• **Hammerer, Karl**
**6330 Kufstein (AT)**

(74) Vertreter: **Peckmann, Ralf et al**
**Reinhard-Skuhra-Weise & Partner GbR**
**Friedrichstrasse 31**
**80801 München (DE)**

(56) Entgegenhaltungen:
**EP-A- 0 549 910        US-A- 5 980 248**

**Beschreibung**

Die vorliegende Erfindung betrifft eine eine Antriebseinrichtung aufweisende Zahnbehandlungsvorrichtung, und insbesondere ein zahnmedizinisches Behandlungsinstrument mit einem Überlastschutz.

Zahnmedizinische Behandlungsinstrumente, wie beispielsweise Zahnbohrer oder Zahnfeilen, sind bei ihrem Einsatz einer hohen mechanischen Belastung ausgesetzt. Trotz des Einsatzes von hochfesten Materialien, wie z.B. Titan, ist eine Beanspruchung dieser Instrumente über ihre Elastizitäts- und Festigkeitsgrenzen hinaus oft unvermeidbar. Dies führt neben starker Abnutzung teilweise bis zum Abscheren eines Instrumentenkopfes.

Zur Verhinderung einer solchen Instrumenten-Überbelastung ist bekannt elektronische Einrichtungen einzusetzen, um das auf den rotierenden Bohrer wirkende mechanische Drehmoment auf einen vom jeweiligen Instrumenten-Typ abhängigen spezifisch ermittelten Maximalwert zu begrenzen. Da als Antriebsquelle solcher Dental-Behandlungsinstrumente in der Regel ein Elektromotor, z.B. ein elektronisch kommutierter DC-Motor "DC brushless motor", eingesetzt wird, erfolgt die Begrenzung des Antriebsdrehmoments durch eine Begrenzung der elektrischen Versorgungsparameter, insbesondere des Stromes, des Antriebsmotors. Von Nachteil bei der Strombegrenzung des Antriebsmotors ist, dass eine spezifisch vorgegebene Motor-Kennlinie durchfahren wird, welche in einer Labor-Umgebung, d.h. bei homogenem Bohrmaterial, experimentell ermittelt wurde. Im Praxiseinsatz sind die auftretenden Drehmomente z.B. im Wurzelkanal eines Zahnes jedoch stark von der individuellen Geometrie des Zahnmaterials und der individuellen Konsistenz des Zahnmaterials abhängig. Somit ergibt sich in der Praxis eine deutliche Abweichung und Streuung der tatsächlich auftretenden Drehmomente, insbesondere Drehmomentsprünge, im Gegensatz zu den experimentell ermittelten Parametern. Darüber hinaus wächst das Widerstandsmoment des eindringenden Bohrers in nicht linearer Weise mit der Eindringtiefe in den Zahn überproportional. Einem drohenden Abscheren eines Zahnbohrkopfes, also einem sogenannten Instrumentenbruch, geht eine starke Torsion des Bohrers voran, welche auch bereits vor Erreichen des maximal tolerierten Antriebs-Drehmoments eintreten kann. Dieses Phänomen tritt insbesondere bei bereits stark benutzten Behandlungsinstrumenten aufgrund von Metall-Ermüdung auf. Somit kann nachteiligerweise ein Instrumentenbruch auch unterhalb des kritischen Antriebs-Drehmoments erfolgen, welches mit den oben genannten Methoden nicht vermieden werden kann.

Aus der US 5980280 ist ein Motorsteuergerät für ein zahnärztliches Handstück bekannt, wobei das Lastdrehmoment durch Messung der elektrischen Versorgungsparameter des Antriebsmotors, erfasst wird.

Der Erfindung liegt die Aufgabe zugrunde, die oben angegebenen Nachteile zu beseitigen.

Diese Aufgabe wird erfindungsgemäß durch die im Anspruch 1 angegebenen Merkmale gelöst.

Weitere Ausgestaltungen der Erfindung ergeben sich aus den Unteransprüchen.

Die direkte Drehmoment-Erfassung gemäß der vorliegenden Erfindung macht es möglich, z.B. einen Zahnarzt von der Aufgabe zu befreien, kritische Arbeitspunkte, welche einen Instrumentenbruch mit sich bringen können, empirisch bzw. intuitiv zu beachten.

Die Ansteuerung der Antriebseinrichtung wird in Abhängigkeit des erfassten Drehmoments geregelt und schaltet vor Erreichen eines vorbestimmten Drehmoments oder auch bei einem vorbestimmten Drehmomentanstieg sofort ab. Instrumentenbrüche können auf diese Weise vermieden werden.

Neben einer Kostenreduktion für einen Zahnarzt, für welchen der Instrumenteneinsatz einen nicht zu vernachlässigenden Kostenfaktor darstellt, ergibt sich gegenüber dem Patienten der Vorteil der Vermeidung eines abgebrochenen Behandlungsinstrumentes im Mundraum bzw. direkt im Zahn weitestgehend erspart.

Nachfolgend wird eine bevorzugte Ausführungsform der Erfindung anhand der Zeichnung zur Erläuterung weiterer Merkmale beschrieben.

In der Zeichnung zeigt:

Figur 1    eine schematische Querschnittsansicht eines zahnmedizinischen Behandlungsinstruments zur Erläuterung einer Ausführungsform der vorliegenden Erfindung;

Figur 2    eine schematische Querschnittsansicht einer Dental-Einrichtung mit einer Einrichtung zur Aufnahme der Dental-Einrichtung zur Erläuterung eines Details einer ersten Ausführungsform der vorliegenden Erfindung; und

Figur 3    eine schematische Querschnittsansicht einer Dental-Einrichtung mit einer Einrichtung zur Aufnahme der Dental-Einrichtung zur Erläuterung eines Details einer zweiten Ausführungsform der vorliegenden Erfindung.

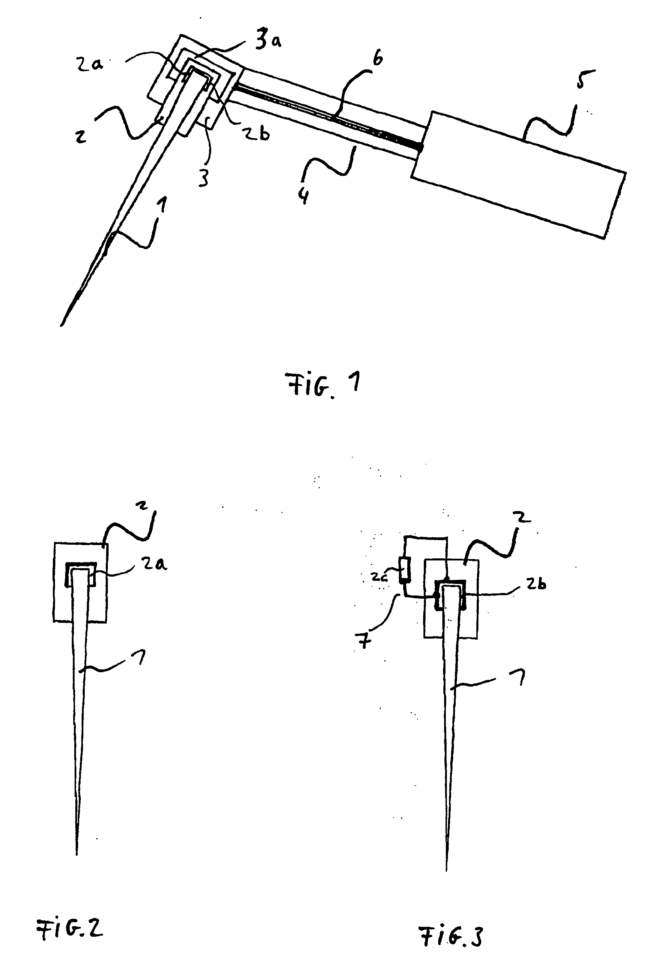

In Figur 1 ist schematisch im Querschnitt eine Vorrichtung zur Behandlung von Zähnen dargestellt. Eine Dental-Einrichtung 1 zur Bearbeitung von Zähnen bzw. Zahnoberflächen ist in einer Einrichtung 2 zur Aufnahme der Dental-Einrichtung eingespannt. Die Dental-Einrichtung 1 wird vorzugsweise durch eine Zahnfeile oder einen Zahnbohrer gebildet, welche insbesondere aus einem hochfesten Material, wie beispielsweise Titan, bestehen. Die Einrichtung 2 zur Aufnahme der Dental-Einrichtung 1 entspricht im wesentlichen einem Bohrfutter, in welchem Dental-Einrichtungen 1 zur Übertragung von Drehmomenten eingespannt werden.

Die Aufnahme-Einrichtung 2 ist drehbar in einer Halterung 3, z.B. einem Winkelstück, gelagert. Das Winkelstück 3 ist über eine Verlängerungseinrichtung 4 mit einer Antriebseinrichtung 5 starr verbunden. Über eine drehbar gelagerte Welle 6 ist die Antriebseinrichtung 5 mit der drehbar gelagerten Aufnahme-Einrichtung 2 zum Antreiben dieser verbunden. Im Bereich des Winkelstücks 3 ist zu diesem Zweck beispielsweise eine Zahnrad-Konstruktion oder zumindest ein Kardan-Gelenk oder dergleichen (jeweils nicht dargestellt) vorgesehen. Die Antriebseinrichtung 5 wird vorzugsweise durch einen Elektromotor gebildet, welcher drehfest mit der Welle 6 verbunden ist, kann jedoch auch beispielsweise durch eine pneumatische Antriebseinrichtung ersetzt sein. Darüber hinaus ist alternativ auch ein Direktantrieb der Aufnahmeeinrichtung 2 durch die Antriebseinrichtung 5 ohne langgestreckte Welle (nicht dargestellt) vorgesehen.

Das im Betrieb auf die Dental-Einrichtung 1 wirkende Drehmoment wird über die Aufnahme-Einrichtung 2 direkt am Schaft der Dental-Einrichtung 1 gemessen, so dass fehlerhafte Einflüsse in der Übertragungskette von der Antriebseinrichtung 5 über die Welle 6 bis zur Aufnahme-Einrichtung 2 vermieden werden. Die Aufnahme-Einrichtung 2 bzw. das spezielle, miniaturisierte Bohrfutter dient dabei als mechanisches Kupplungsglied zwischen dem Winkelstück 3, der Welle 6 und der Dental-Einrichtung 1.

Die rotatorisch durch die Welle 6 angetriebene Aufnahme-Einrichtung 2 weist vorzugsweise ein Torsions-sensitives Piezo-Element 2a auf, welches ein der Torsion entsprechendes Drehmoment-proportionales elektrisches Spannungssignal abgibt. Alternativ hierzu kann die Aufnahme-Einrichtung 2 auch eine kapazitive Einrichtung 2b variabler Kapazität aufweisen, welche zusammen mit einer festen Induktivität 2c gemäß Fig. 3 einen elektrischen Schwingkreis 7 bildet, dessen Resonanzfrequenz sich entsprechend mit dem auf die Aufnahme-Einrichtung 2 wirkenden Drehmoment verändert. Diese Resonanzfrequenz wird durch eine Detektionseinrichtung (nicht dargestellt) erfasst und kann somit zur Drehmoment-Bestimmung herangezogen werden.

Das Piezo-Element 2a der Aufnahme-Einrichtung 2 erfasst eine Kraft, welche auf das Piezo-Element 2a wirkt. Entsprechend dieser Kraftwirkung generiert das Piezo-Element 2a ein Spannungssignal. Diese Kraft und somit die generierte Spannung ist proportional dem auf die Aufnahme-Einrichtung 2 wirkenden Drehmoment. Im Falle der Verwendung einer kapazitiven Einrichtung 2b alternativ zum Piezo-Element 2a ändert sich entsprechend einer Drehmomentproportionalen Krafteinwirkung auf diese Einrichtung 2a die Kapazität. Dadurch ändert ein Schwingkreis 7 gemäß Fig. 3 aus dieser veränderlichen Kapazität 2b und einer festen Induktivität 2c seine Resonanzfrequenz. Aus dieser Frequenzänderung lässt sich schließlich entsprechend ein auf die Aufnahme-Einrichtung 2 wirkendes Drehmoment ermitteln.

Da der von der Aufnahme-Einrichtung 2 generierte Messwert bzw. das generierte Signal (nicht dargestellt) an einer rotierenden Einrichtung, nämlich der Aufnahme-Einrichtung 2, generiert wird, ist eine berührungslose Signalübertragung zwischen der rotierenden Aufnahme-Einrichtung 2 und dem festen Winkelstück 3 vorgesehen. Gemäß der vorliegenden Ausführungsform werden Signale induktiv vom statischen System, d.h. dem Winkelstück 3, auf das rotierende System, d.h. die rotierende Aufnahme-Einrichtung 2, über eine Übertragungseinrichtung 3a, vorzugsweise mit einem konzentrischen, zylindrischen Luftspalt, und in anderer Richtung eingekoppelt.

Gemäß der Ausführungsform mit der kapazitiven Einrichtung 2b in der Aufnahme-Einrichtung 2 wird die sich im Schwingkreis 7 ausbildende Resonanzfrequenz, welche von dem auf die Aufnahme-Einrichtung 2 wirkenden Drehmoment abhängig ist, dadurch ermittelt, dass eine Anregungsfrequenz im benachbarten Frequenzbereich "gewobbelt" wird. Unter "Wobbeln" ist ein periodisches Durchfahren eines Frequenzbereiches zu verstehen. Im Schwingkreis 7 herrscht bei der Anregungsfrequenz eine Resonanz, wenn die maximale Energie auf den Schwingkreis 7 übertragen wird. In Kenntnis der gegenwärtigen gewobbelten Anregungsfrequenz lässt sich somit die Frequenz des Schwingkreises 7 mit der kapazitiven Einrichtung 2b der Aufnahme-Einrichtung 2 bestimmen. Daraus ist ein Rückschluss auf das auf die Dental-Einrichtung 1 bzw. die Aufnahme-Einrichtung 2 wirkende Drehmoment möglich.

Für jede Dental-Einrichtung 1, d.h. jeden Instrumenten-Typ, wie beispielsweise Bohrer, Feilen, usw., existiert ein spezifisches Bruch- bzw. Abscher-Drehmoment, welches als obere Belastungsgrenze für das individuelle Instrument gilt. Um einen Instrumentenbruch, d.h. ein Abscheren, zu vermeiden, darf dieses Grenz-Drehmoment nicht überschritten oder erreicht werden. Wird, wie im Vorangehenden erläutert, ein Drehmoment-Wert an der Aufnahme-Einrichtung 2 der Dental-Einrichtung 1 ermittelt, welcher über einem vorbestimmten Schwellwert liegt, so wird die Antriebseinrichtung 5, vorzugsweise unter Wahrung eines zusätzlichen Abstands vom vorbestimmten Schwellwert, gestoppt bzw. abgeregelt. Dies erfolgt gemäß der Ausführungsform mit dem Piezo-Element 2a beispielsweise über eine Komparatorschaltung zum Vergleich der Spannung am Piezo-Element 2a mit einer vorbestimmten Schwellenspannung. Gemäß der Ausführungsform mit der kapazitiven Einrichtung 2b und dem damit gebildeten Schwingkreis 7 nach Fig. 3 entspricht eine bestimmte Resonanzfrequenz einem Drehmoment. In diesem Fall wird vorzugsweise ein Vergleich der Resonanzfrequenz mit einer in einer Speichereinrichtung abgelegten Frequenz/Drehmoment-Tabelle durchgeführt.

In praxisnahen Fällen, in welchen das mechanisch angreifende Drehmoment an der Dental-Einrichtung 1 bzw. der Aufnahme-Einrichtung 2 spontan und sprunghaft ansteigt, wie beispielsweise beim Blockieren eines Bohrers aufgrund eines stark gekrümmten Wurzelkanals, ist es erforderlich, die Antriebseinrichtung 5 sofort zu stoppen. Wird beispielsweise ein Elektromotor als Antriebseinrichtung 5 eingesetzt, so ist der Motorstrom sofort abzuschalten, und vorzugsweise sind die Rotorwicklungen des Motors kurzzuschließen. Auf diese Weise wird ein möglichst schneller Stopp der Welle 6 und folglich auch der Aufnahme-Einrichtung 2 und der Dental-Einrichtung 1 erzielt, so dass es nicht zu einem Bruch der Dental-Einrichtung 1 kommt.

Figur 2 zeigt schematisch im Querschnitt eine Dental-Einrichtung 1, welche in einer Aufnahme-Einrichtung 2 eingespannt ist, wobei die Aufnahme-Einrichtung 2 gemäß Figur 2 mit einer Torsions-sensitiven Piezo-Einrichtung 2a zur direkten Kraft- bzw. Drehmomentmessung dargestellt ist.

Figur 3 zeigt ein ähnliches Schnittbild wie Figur 2, jedoch ist gemäß Figur 3 die Aufnahme-Einrichtung 2 mit einem elektrischen Schwingkreis 7 mit kapazitiver Einrichtung 2b variabler Kapazität und einer daran gekoppelten, festen Induktivität 2c ausgeführt, welcher eine Torsionssensitive Resonanzfrequenz zur Drehmomenterfassung aufweist, wie im Vorangehenden erläutert.

Dental-Einrichtungen 1, d.h. Dental-Instrumente, wie beispielsweise Bohrer oder Feilen, weisen auch bei einem vor Überlastung geschützten Betrieb eine begrenzte Lebensdauer auf. Dies liegt in der Material-Ermüdung dieser stark beanspruchten Instrumente begründet. Für jedes individuelle Instrument existiert dabei ein Ermüdungs-Grenzwert, welcher als Integral

$$EGW = \int_0^T D(t) * dt$$

darstellbar ist, wobei EGW für den Ermüdungs-Grenzwert steht, D(t) das aktuelle Drehmoment wiedergibt und T für die Nutzungszeit des Instruments darstellt. Der Ermüdungs-Grenzwert eines Instruments, d.h. einer Dental-Einrichtung 1, sollte nicht überschritten werden, um einem Bruch des Instruments, einem sogenannten Ermüdungs-Bruch vorzubeugen. Dazu weist eine in der Zeichnung nicht dargestellte Ausführungsform der vorliegenden Erfindung eine Speichereinrichtung auf, in welcher für jedes individuelle verwendete Instrument, d.h. eine Dental-Einrichtung 1, ein "Ermüdungs-Konto" geführt wird. In diesem "Ermüdungs-Konto" wird die Nutzungs-Historie eines individuellen Dental-Instruments erfasst und gespeichert.

Jedem neuen Dental-Instrument 1 wird zu Beginn der Wert 0 zugewiesen. Bei jedem Gebrauch des Instruments 1 wird mit der Drehmoment-Erfassung in der Aufnahme-Einrichtung 2 der Verlauf des Belastungs-Drehmoments ermittelt, mit der jeweiligen Einsatz-Dauer multipliziert, d.h. gewichtet, und auf das Konto des individuellen Instruments aufaddiert. Die Erfassung des Drehmoments erfolgt vorzugsweise mit einer vorbestimmten Abtastrate, so dass sich als Kontowert nach dem Gebrauch eines Instruments eine Summe aus dem Produkt des Kehrwerts der Abtastrate mit dem Drehmoment-Wert zum entsprechenden Abtast-Zeitpunkt ergibt. Solange der für jedes individuelle Dental-Instrument aufaddierte Konto-Wert des entsprechenden Drehmoment-Zeitprodukts kleiner als der oben beschriebene Ermüdungs-Grenzwert ist, darf das Instrument weiter verwendet werden. Bei Erreichen bzw. Überschreiten dieses Grenzwerts ist das Instrument durch ein Substitut zu ersetzen und insbesondere der entsprechende Konto-Wert für das neue Dental-Instrument auf 0 zurückzusetzen.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Bezugszeichenliste

1 Dental-Einrichtung, z.B. Zahnfeile oder Zahnbohrer
2 Aufnahmeeinrichtung, vorzugsweise Mini-Bohrfutter
2a druck- bzw. torsionssensitive Piezo-Einrichtung
2b druck- bzw. torsionssensitive kapazitive Einrichtung
2c feste Induktivität
3 Halterung, vorzugsweise Winkelstück
3a Übertragungseinrichtung, vorzugsweise berührungslos
4 Verlängerungseinrichtung
5 Antriebseinrichtung, vorzugsweise Elektromotor
6 Antriebswelle
7 elektrischer Schwingkreis

**Patentansprüche**

**1.** Zahnbehandlungsvorrichtung mit:

einer Dental-Einrichtung (1) zur Bearbeitung von Zähnen und Knochen;
einer Antriebseinrichtung (5) zum Antreiben der Dental-Einrichtung (1); und
einer Einrichtung (2) zwischen der Dental-Einrichtung (1) und der Antriebseinrichtung (5) zur Aufnahme der Dental-Einrichtung (1) **dadurch gekennzeichnet, dass** diese Aufnahmeeinrichtung (2) eine Einrichtung (2a; 2b) zur Erfassung des an der Dental-Einrichtung (1) angreifenden Drehmoments und eine Einrichtung (3a) zur berührungslosen Übertragung eines dem erfassten Drehmoment entsprechenden Signals aufweist.

**2.** Vorrichtung nach Anspruch 1,

**dadurch gekennzeichnet,**
**dass** die Einrichtung (2a; 2b) zur Erfassung des an der Dental-Einrichtung (1) angreifenden Drehmoments ein, vorzugsweise Torsions-sensitives, Piezo-Element (2a) aufweist, an dessen Ausgang ein Drehmoment-abhängiges Spannungssignal anliegt.

3. Vorrichtung nach Anspruch 1,
**dadurch gekennzeichnet,**
**dass** die Einrichtung (2a; 2b) zur Erfassung des an der Dental-Einrichtung (1) angreifenden Drehmoments eine kapazitive Einrichtung (2b) mit einer Drehmomentabhängigen Kapazität aufweist.

4. Vorrichtung nach einem der vorangehenden Ansprüche,
**dadurch gekennzeichnet,**
**dass** die Einrichtung (3a) zur berührungslosen Übertragung des dem erfassten Drehmoment entsprechenden Signals einen konzentrischen, vorzugsweise zylindrischen Luftspalt zur induktiven Kopplung an die ruhende Halterung (3) der Antriebseinrichtung (5) aufweist.

5. Vorrichtung nach Anspruch 3,
**dadurch gekennzeichnet,**
**dass** die Einrichtung (2) zur Aufnahme der Dental-Einrichtung (1) einen elektrischen Schwingkreis (7) aufweist, welcher eine dem erfassten Drehmoment entsprechende Resonanzfrequenz aufweist, die von einem externen variablen Oszillatorsignal induktiv anregbar ist.

6. Vorrichtung nach einem der vorangehenden Ansprüche,
**dadurch gekennzeichnet,**
**dass** eine Einrichtung zur Abschaltung des elektrischen Stromes eines elektrischen Antriebsmotors der Antriebseinrichtung (5) bei Überschreitung eines vorbestimmten Drehmoments, vorzugsweise unter Kurzschließen der Motorwicklungen, vorgesehen ist.

7. Vorrichtung nach einem der vorangehenden Ansprüche,
**dadurch gekennzeichnet,**
**dass** eine externe Speichereinrichtung zum Speichern der kumulierten Drehmomentbelastung der Dental-Einrichtung
über der Zeit vorgesehen ist.

8. Vorrichtung nach Anspruch 7,
**dadurch gekennzeichnet,**
**dass** eine Berechnungseinrichtung zum Bilden eines Integrals des erfassten Drehmoments über der Zeit vorgesehen ist.

9. Vorrichtung nach einem der vorangehenden Ansprüche,
**dadurch gekennzeichnet,**
**dass** die Dentaleinrichtung (1) einen Zahn-Bohrkopf oder eine Zahn-Feile aufweist.

10. Vorrichtung nach einem der vorangehenden Ansprüche,
**dadurch gekennzeichnet,**
**dass** die Antriebseinrichtung (5) über eine Welle (6) an die Einrichtung (2) zur Aufnahme der Dental-Einrichtung (1) gekoppelt ist.

11. Vorrichtung nach einem der vorangehenden Ansprüche,
**dadurch gekennzeichnet,**
**dass** die Antriebseinrichtung (5) eine Pneumatikeinrichtung aufweist.

**Claims**

1. Dental treatment device, comprising:

    a dental means (1) for treating teeth and bones;
    a drive means (5) for driving the dental means (1); and
    a means (2) between the dental means (1) and the drive means (5) for accommodating the dental means (1),

    **characterized in that**
    this accommodating means (2) comprises a means (2a; 2b) for detecting the torque acting on the dental means (1) and a means (3a) for the contactless transmission of a signal corresponding to the detected torque.

2. Device according to claim 1,
**characterized in that**
the means (2a; 2b) for detecting the torque acting on the dental means (1) comprises a, preferably torsion-sensitive, piezoelectric element (2a) at the output terminal of which a torque-dependent voltage signal is available.

3. Device according to claim 1,
**characterized in that**
the means (2a; 2b) for detecting the torque acting on the dental means (1) comprises a capacitive means (2b) having a torque-dependent capacity.

4. Device according to one of the preceding claims,
**characterized in that**
the means (3a) for the contactless transmission of the signal corresponding to the detected torque comprises a concentric, preferably cylindrical air gap for the inductive coupling to the static holder (3) of the drive means (5).

**5.** Device according to claim 3,
**characterized in that**
the means (2) for accommodating the dental means (1) comprises an electric resonant circuit (7) having a resonance frequency corresponding to the detected torque, which is inductively excitable by an external variable oscillator signal.

**6.** Device according to one of the preceding claims,
**characterized in that**
a means is provided for switching off the electric current of an electric drive motor of the drive means (5) if a predetermined torque is exceeded, preferably by short-circuiting the motor windings.

**7.** Device according to one of the preceding claims,
**characterized in that**
an external storage means for storing the cumulated torque load of the dental means over the time is provided.

**8.** Device according to claim 7,
**characterized in that**
a calculating means for generating an integral of the detected torque over the time is provided.

**9.** Device according to one of the preceding claims,
**characterized in that**
the dental means (1) comprises a tooth drilling head or a tooth file.

**10.** Device according to one of the preceding claims,
**characterized in that**
the drive means (5) is coupled to the means (2) for accommodating the dental means (1) by a shaft (6).

**11.** Device according to one of the preceding claims,
**characterized in that**
the drive means (5) comprises a pneumatic means.

**Revendications**

**1.** Appareil de traitement dentaire comportant :

un dispositif dentaire (1) destiné au traitement des dents et des os ;
un dispositif d'entraînement (5) destiné à entraîner le dispositif dentaire (1) ; et
un dispositif (2) entre le dispositif dentaire (1) et le dispositif d'entraînement (5) destiné à recevoir le dispositif dentaire (1),

**caractérisé par le fait que** ce dispositif récepteur (2) présente un dispositif (2a, 2b) destiné à saisir le moment de couple appliqué au dispositif dentaire (1) et un dispositif (3a) destiné à la transmission sans contact d'un signal correspondant au moment de couple saisi.

**2.** Dispositif selon la revendication 1,
**caractérisé par le fait que** le dispositif (2a, 2b) présente, pour la saisie du moment de couple appliqué au dispositif dentaire (1), un élément piézo-électrique préférentiellement sensible à la torsion (2a), à la sortie duquel on obtient un signal de tension dépendant du moment de couple.

**3.** Dispositif selon la revendication 1,
**caractérisé par le fait que** le dispositif (2a, 2b) destiné à la saisie du moment de couple appliqué au dispositif dentaire (1) présente un moyen capacitif (2b) disposant d'une capacité dépendant du moment de couple.

**4.** Dispositif selon l'une quelconque des revendications précédentes,
**caractérisé par le fait que** le dispositif (3a) destiné à la transmission sans contact du signal correspondant au moment de couple saisi présente un entrefer concentrique, préférentiellement cylindrique, destiné au couplage inductif au niveau du support statique (3) du dispositif d'entraînement (5).

**5.** Dispositif selon la revendication 3,
**caractérisé par le fait que** le dispositif (2) destiné à recevoir le dispositif dentaire (1) présente un circuit oscillant (7) électrique présentant une fréquence de résonance correspondant au moment de couple saisie, excitable à partir d'un signal d'oscillateur externe variable de manière inductive.

**6.** Dispositif selon l'une quelconque des revendications précédentes,
**caractérisé par le fait qu'**il est prévu un dispositif destiné à la coupure du courant électrique d'un moteur d'entraînement électrique du dispositif d'entraînement (5) en cas de dépassement d'un moment de couple prédéfini, préférentiellement par court-circuitage des bobinages moteur.

**7.** Dispositif selon l'une quelconque des revendications précédentes,
**caractérisé par le fait qu'**il est prévu un dispositif de mémorisation externe destiné à mémoriser la sollicitation du moment de couple cumulée du dispositif dentaire au cours du temps.

**8.** Dispositif selon la revendication 7,
**caractérisé par le fait qu'**il est prévu un dispositif de calcul destiné à former une intégrale du moment de couple saisi au cours du temps.

**9.** Dispositif selon l'une quelconque des revendications précédentes,
**caractérisé par le fait que** le dispositif dentaire (1) présente une fraise dentaire ou une lime dentaire.

10. Dispositif selon l'une quelconque des revendications précédentes,
**caractérisé par le fait que** le dispositif d'entraînement (5) est couplé via un arbre (6) au dispositif (2) destiné à recevoir le dispositif dentaire (1).

11. Dispositif selon l'une quelconque des revendications précédentes,
**caractérisé par le fait que** le dispositif d'entraînement (5) présente un dispositif pneumatique.

FiG. 1

FiG.2

FiG.3